# EUROPÄISCHE PATENTSCHRIFT

(11) **EP 0 911 530 B1**
(45) Veröffentlichungstag und Bekanntmachung des Hinweises auf die Patenterteilung: **11.06.2003**
(21) Anmeldenummer: 98118039.1
(22) Anmeldetag: 23.09.1998
(51) Int. Cl.: F15B 15/06, B25J 9/14, B25J 18/04

(54) **Dreh-Linear-Einheit**
Rotary-linear-unit
Vérin à mouvements de translation et de rotation

(30) Priorität: 25.10.1997 DE 29719015 U
(43) Veröffentlichungstag der Anmeldung: 28.04.1999
(73) Patentinhaber: Festo AG & Co, 73734 Esslingen (DE)
(72) Erfinder: Thorwart, Gerhard, 70794 Filderstadt (DE); Wagner, Albrecht, 73650 Winterbach (DE)
(74) Vertreter: Abel, Martin, Dipl.-Ing.

(56) Entgegenhaltungen:
- DE-A- 4 229 989
- US-A- 2 893 210
- US-A- 3 302 469
- US-A- 5 404 983

## Beschreibung

Die Erfindung betrifft eine Dreh-Linear-Einheit, mit einem fluidbetätigten Drehantrieb, der eine zu einer Drehbewegung antreibbare Antriebswelle aufweist und der an der Rückseite eines fluidbetätigten Linearantriebes angeordnet ist, der über eine axial beweglich und zugleich drehfest mit der Antriebswelle des Drehantriebes gekoppelte Abtriebseinheit verfügt, die einen Kolben und eine fest mit diesem verbundene, an der Vorderseite des Linearantriebes herausragende Abtriebsstange aufweist.

Eine Dreh-Linear-Einheit dieser Art geht aus der DE 42 29 989 A1 hervor. Sie ermöglicht an der Abtriebsstange den Abgriff einer Drehbewegung, einer Linearbewegung oder einer kombinierten Dreh-Linear-Bewegung. Die Drehbewegung wird von einem Drehantrieb erzeugt, die Linearbewegung von einem Linearantrieb. Die Kopplung der beiden Antriebe erfolgt zwischen der Antriebswelle des Drehantriebes und der einen Kolben und eine Abtriebsstange umfassenden Abtriebseinheit des Linearantriebes, wobei die Antriebswelle hohl ausgeführt ist, so daß eine fest mit der Abtriebseinheit verbundene Stange drehfest und axial verschieblich eintauchen kann.

Der bei der bekannten Dreh-Linear-Einheit angewandte konstruktive Aufbau ist vor allem für größere Baugrößen geeignet. Kleinere Baugrößen lassen sich damit nicht oder nur unter erhöhtem fertigungstechnischem Aufwand realisieren.

Es ist daher die Aufgabe der vorliegenden Erfindung, eine Dreh-Linear-Einheit der eingangs genannten Art zu schaffen, die bei zuverlässiger Funktionsweise und vereinfachter Herstellung eine Realisierung kleinerer Baugrößen ermöglicht.

Zur Lösung dieser Aufgabe ist vorgesehen, daß eine fest mit der Antriebswelle des Drehantriebes verbundene Lagerstange vorhanden ist, die im Innern des Linearantriebes koaxial in die Abtriebseinheit hineinragt, daß auf der Lagerstange eine fest mit dem Kolben des Linearantriebes verbundene Lagerhülse drehfest und zugleich axial verschiebbar gelagert ist und daß der Kolben in zwei axial aufeinanderfolgende Kolbenteile unterteilt ist, die an ihren einander zugewandten Axialseiten über jeweils eine Aufnahmevertiefung verfügen, wobei die Lagerhülse zwischen den beiden Kolbenteilen angeordnet ist und mit jeweils einem Längenabschnitt in die Aufnahmevertiefungen eintaucht.

Auf diese Weise liegt eine Dreh-Linear-Einheit vor, bei der zur Gewährleistung der axial verschiebbaren und zugleich drehfesten Kopplung zwischen der Abtriebseinheit und der Antriebswelle eine eigens angepaßte Lagerhülse Verwendung finden kann, die zugunsten eines kompakten Aufbaus einen Bestandteil des Kolbens der Abtriebseinheit bildet. Der Kolben ist in zwei insbesondere als identische Kolbenhälften ausgeführte Kolbenteile unterteilt, die zwischen sich die Lagerhülse aufnehmen.

Vorteilhafte Weiterbildungen der Erfindung gehen aus den Unteransprüchen hervor. Als Lagereinrichtung, mit der die Lagerhülse längsbeweglich und zugleich drehfest an der Lagerstange geführt ist, bietet sich besonders eine besonders reibungsarme und leichtgängige Wälzlagereinrichtung an, die zweckmäßigerweise als Kugellagereinrichtung, beispielsweise als Kugel-Umlauf-Lagereinrichtung, ausgeführt ist. Speziell bei kleinen Baugrößen der Dreh-Linear-Einheit, bei denen die zum Antreiben des Kolbens aufzubringenden Fluiddrücke verhältnismäßig gering sind, spielt die Leichtgängigkeit der Führung ohne Beeinträchtigung der Führungsgenauigkeit eine wichtige Rolle.

Besondere separate Befestigungsmittel erübrigen sich, wenn die beiden Kolbenteile mit ihren Aufnahmevertiefungen von entgegengesetzten Axialseiten her fest auf die Lagerhülse aufgepreßt sind. Zusätzlich zu dieser rein kraftschlüssigen Verbindung kann bei Bedarf als Sicherheitsmaßnahme eine ergänzende Formschlußverbindung vorgesehen sein, beispielsweise derart, daß die die Aufnahmevertiefung umfangsseitig begrenzende Wand der Kolbenteile an einer oder mehreren Stellen in eine zugeordnete, an der Lagerhülse vorgesehene Haltevertiefung eingedrückt wird.

Insbesondere die vorerwähnten Maßnahmen machen es möglich, auf eine unmittelbare Verbindung zwischen den Kolbenteilen zu verzichten und den Zusammenhalt des Kolbens über die zwischengeschaltete Lagerhülse vorzunehmen. Die Kolbenteile können sogar mit axialem Abstand zueinander angeordnet werden, wobei die Lagerhülse als verbindendes Überbrückungsglied fungiert.

Bei einer weiteren vorteilhaften Bauform der Dreh-Linear-Einheit ist vorgesehen, daß der Drehantrieb den rückseitigen Abschlußdeckel des Linearantriebes bildet. Auf diese Weise kann auf einen zusätzlichen Abschlußdeckel des Linearantriebes, wie er im Falle der DE 42 29 989 A1 in Gestalt einer als Abschlußwand bezeichneten Flanschplatte verwirklicht wurde, verzichtet werden. Dies ermöglicht vor allem auch sehr kompakte Längenabmessungen. Die endseitige Abdichtung des den Kolben aufnehmenden Aufnahmeraumes des Linearantriebes kann vorzugsweise über eine Kupplungshülse erfolgen, die die Antriebswelle und die Lagerstange drehfest und axial unbeweglich miteinander verbindet und die drehbar und unter Abdichtung in ein Gehäuserohr des Linearantriebes eingesetzt ist.

Nachfolgend wird die Erfindung anhand der beiliegenden Zeichnung näher erläutert. Es zeigen im einzelnen:

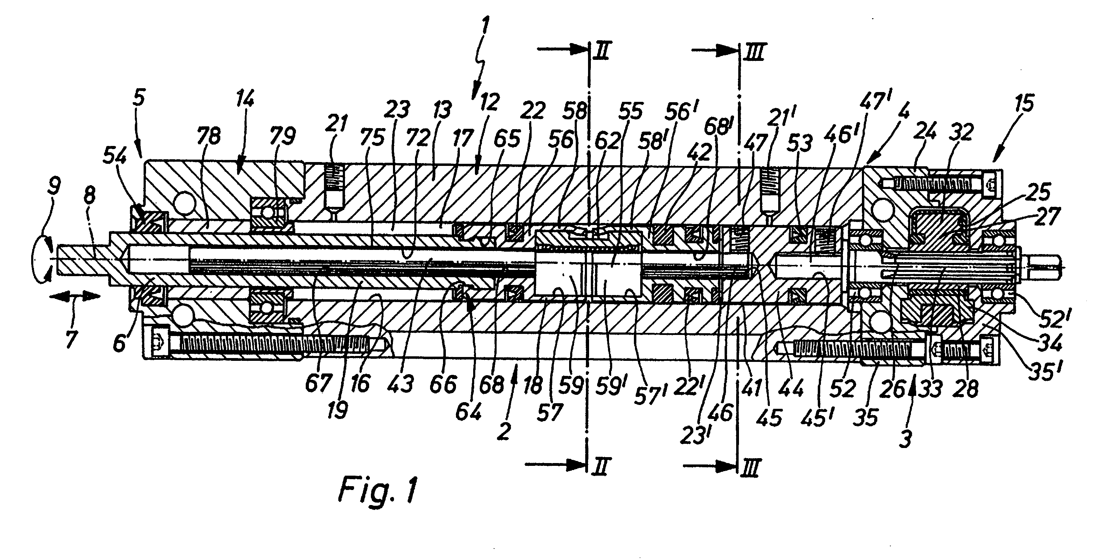

- Fig. 1: eine bevorzugte Ausführungsform der erfindungsgemäßen Dreh-Linear-Einheit im Längsschnitt,
- Fig. 2: ein vergrößertes Detail der Dreh-Linear-Einheit gemäß Schnittlinie II-II aus Fig. 1,
- Fig. 3: ein weiteres vergrößertes Detail der Dreh-Linear-Einheit gemäß Schnittlinie III-III aus Fig. 1 und
- Fig. 4: eine perspektivische Darstellung der Dreh-Linear-Einheit gemäß Fig. 1 mit Blick auf die den Drehantrieb aufweisende Rückseite, wobei ergänzend in Explosionsdarstellung eine optional vorgesehene Drehwinkel-Einstelleinrichtung sowie eine Positionserfassungseinrichtung für die Drehposition der Antriebswelle des Drehantriebes abgebildet sind.

Die in der Zeichnung abgebildete Dreh-Linear-Einheit 1 umfaßt einen fluidbetätigten Linearantrieb 2 und einen mit diesem zu einer Einheit zusammengefaßten fluidbetätigten Drehantrieb 3. Der Drehantrieb 3 befindet sich im Bereich der Rückseite 4 des Linearantriebes 2, an dessen Vorderseite 5 eine Abtriebsstange 6 herausragt.

Die Abtriebsstange 6 läßt sich durch einzelne oder durch überlagerte Betätigung des Linearantriebes 2 und des Drehantriebes 3 wahlweise zu einer Linearbewegung 7 in Richtung der Längsachse 8 des Linearantriebes 2 und zu einer Drehbewegung 9 um die erwähnte Längsachse 8 antreiben. Es sind Linearbewegungen in beiden Längsrichtungen sowie Drehbewegungen im Uhrzeigersinn und im Gegenuhrzeigersinn möglich. Die jeweils erzeugte Bewegung läßt sich von der Abtriebsstange 6 abgreifen, indem diese mittels nicht näher gezeigter Verbindungsmittel mit einem zu betätigenden Bauteil verbunden wird. Auf diese Weise kann das betreffende Bauteil verschoben, gedreht oder verschwenkt werden.

Der Linearantrieb 2 verfügt über ein Linearantriebs-Gehäuse 12, das ein Gehäuserohr 13 umfaßt, das axial beidenends mit einem vorderen und einem rückseitigen Abschlußdeckel 14, 15 versehen ist. Im Innern des Gehäuserohres 13 befindet sich eine axial durchgehende Gehäuseausnehmung 16, die einen Aufnahmeraum 17 definiert, in dem ein Kolben 18 axial verschiebbar geführt untergebracht ist. Der Kolben 18 steht in fester Verbindung mit der Abtriebsstange 6 und bildet gemeinsam mit dieser die Abtriebseinheit 19 der Dreh-Linear-Einheit 1.

An dem Kolben 18 sind zwei mit axialem Abstand zueinander angeordnete Dichtungseinrichtungen 22, 22' vorgesehen, die zwischen dem Kolben 18 und der Umfangsfläche des Aufnahmeraumes 7 arbeiten. Sie bewirken eine fluiddichte Unterteilung des Aufnahmeraumes 17 in zwei axial aufeinanderfolgende Arbeitskammern 23, 23', die mit zur Außenfläche des Linearantriebs-Gehäuses 12 ausmündenden Anschlußkanälen 21, 21' kommunizieren, über die fluidisches Druckmedium, insbesondere Druckluft, zu- und abgeführt werden kann, um den Kolben 18 und damit die Abtriebseinheit 19 zu einer Linearbewegung in der gewünschten Bewegungsrichtung anzutreiben.

Zugunsten einer axial besonders kompakten Bauweise ist der Drehantrieb 3 unmittelbar an die rückwärtige Stirnfläche des Gehäuserohres 13 angesetzt und bildet gleichzeitig den rückseitigen Abschlußdeckel 15 des Linearantriebes 2. Der Drehantrieb 3 ist in koaxialer Verlängerung direkt an das Gehäuserohr 13 angeflanscht.

Der Drehantrieb 3 des Ausführungsbeispiels ist als Schwenkkolbenantrieb ausgeführt. Er verfügt über ein Drehantriebs-Gehäuse 24, das im Innern eine Kolbenkammer 25 definiert. Durch das Drehantriebs-Gehäuse 24 erstreckt sich zentral und koaxial eine Antriebswelle 26, auf der innerhalb der Kolbenkammer 25 drehfest ein Schwenkkolben 27 sitzt. Dieser weist eine die Antriebswelle 26 umschließende Buchsenpartie 28 und eine von dieser radial abstehende Flügelpartie 32 auf, wobei die drehfeste Verbindung dadurch realisiert wird, daß die Antriebswelle 26 eine Außenverzahnung 33 aufweist, die mit einer komplementären Innenverzahnung der Buchsenpartie 28 in Eingriff steht.

Der Schwenkkolben 27 liegt dichtend an der Begrenzungsfläche der Kolbenkammer 25 an, wobei die Buchsenpartie 28 überdies dichtend mit einer Trennwand 34 zusammenarbeitet, die an einer Umfangsstelle in die im Querschnitt kreisförmige Kolbenkammer 25 eingesetzt ist. Die gehäusefeste Trennwand 34 steht mit der Begrenzungsfläche der Kolbenkammer 25 ebenfalls in Dichtkontakt.

Das Drehantriebs-Gehäuse 24 ist im Bereich der Kolbenkammer 25 in zwei axial aufeinanderfolgende, im wesentlichen platten- oder scheibenartige Gehäuseteile 35, 35' unterteilt. Das erste Gehäuseteil 35 ist unmittelbar an die Stirnfläche des Gehäuserohres 13 angeschraubt, während das zweite Gehäuseteil 35' am ersten Gehäuseteil festgeschraubt ist. Das erste Gehäuseteil 35 hat außen zweckmäßigerweise eine rechteckförmige und insbesondere quadratische Querschnittskontur, die vorzugsweise derjenigen des Gehäuserohres 13 und des vorderen Abschlußdeckels 14 entspricht. Das zweite Gehäuseteil 35' hat beim Ausführungsbeispiel eine zylindrische Außenfläche.

Am Drehantriebs-Gehäuse 24 sind zwei Anschlußöffnungen 36 vorgesehen, die das Anschließen extern herangeführter Druckmittelleitungen ermöglichen. Jeweils eine der Anschlußöffnungen 36 kommuniziert dabei mit einer von zwei Beaufschlagungskammern, die der Schwenkkolben 27 in der Kolbenkammer 25 voneinander abteilt. Durch geeignete Zufuhr und Abfuhr von Druckmittel, insbesondere Druckluft, in die bzw. aus den Beaufschlagungskammern kann der Schwenkkolben 27 zu einer Drehbewegung um die Längsachse der Kolbenkammer 25 veranlaßt werden, so daß auch die Antriebswelle 26 eine entsprechende Drehbewegung ausführt. Beim Ausführungsbeispiel sind Drehbewegungen der Antriebswelle 26 bis maximal etwa 270° realisierbar.

Mittels einer auf der dem Linearantrieb 2 entgegengesetzten Axialseite des Drehantriebs-Gehäuses 24 angeordneten Drehwinkel-Einstelleinrichtung 37 läßt sich stufenlos innerhalb des vorgenannten maximalen Drehwinkelbereiches ein bestimmter geringerer Drehwinkel vorgeben. Eine zusätzlich an dem Drehantrieb 3 vorgesehene Positionserfassungseinrichtung 38 ermöglicht die Erfassung bestimmter ausgewählter oder der momentanen Drehposition der Antriebswelle 26 und gestattet somit die Integration der Dreh-Linear-Einheit in eine Steuerung, bei der die Betätigung der Dreh-Linear-Einheit 1 unter anderem in Abhängigkeit von der momentanen Drehwinkelposition der Antriebswelle 26 und der mit dieser in noch zu erläuternder drehfester Verbindung stehenden Abtriebsstange 6 ermöglicht. In diesem Zusammenhang ist es ferner zweckmäßig, auch eine nicht näher dargestellte Positionserfassungseinrichtung zur Erfassung der momentanen oder bestimmter Axialpositionen der Abtriebseinheit 19 vorzusehen. Diese kann eine beispielsweise am Kolben 18 angeordnete Permanentmagneteinrichtung 42 umfassen, die eine am Außenumfang des Gehäuserohrs 13 angeordnete Sensoreinrichtung betätigen kann, wobei die Sensorsignale in einer zugeordneten Steuerung berücksichtigt werden können, um die Dreh-Linear-Einheit 1 auch in Abhängigkeit von der Axialposition der Abtriebseinheit 19 betätigen zu können.

Zwischen der Abtriebseinheit 19 und der Antriebswelle 26 liegt eine drehfeste und zugleich axial relativ-bewegliche Verbindung vor. Die Abtriebseinheit 19 kann also durch entsprechende Beaufschlagung des Kolbens 18 relativ zur Antriebswelle 26 eine axiale Linearbewegung 7 ausführen. Außerdem kann die Abtriebseinheit 19 durch entsprechende Fluidbeaufschlagung des Schwenkkolbens 27 des Drehantriebes 3 zu einer Drehbewegung 9 angetrieben werden.

Um die geschilderte Verbindung zu realisieren, ist eine koaxial zu der Antriebswelle 26 ausgerichtete Lagerstange 43 vorhanden, die in fester Verbindung mit der Antriebswelle 26 steht und sich vom rückseitigen Bereich der Gehäuseausnehmung 16 innerhalb dieser nach vorne in Richtung zum vorderen Abschlußdeckel 14 erstreckt. Die Lagerstange 43 könnte durchaus einstückig mit der Antriebswelle 26 ausgeführt sein, jedoch ermöglicht die beim Ausführungsbeispiel vorgesehene separate Ausgestaltung eine vereinfachte Anpassung an unterschiedliche Baulängen des Linearantriebes 2 unter Verwendung des gleichen Typs von Drehantrieb.

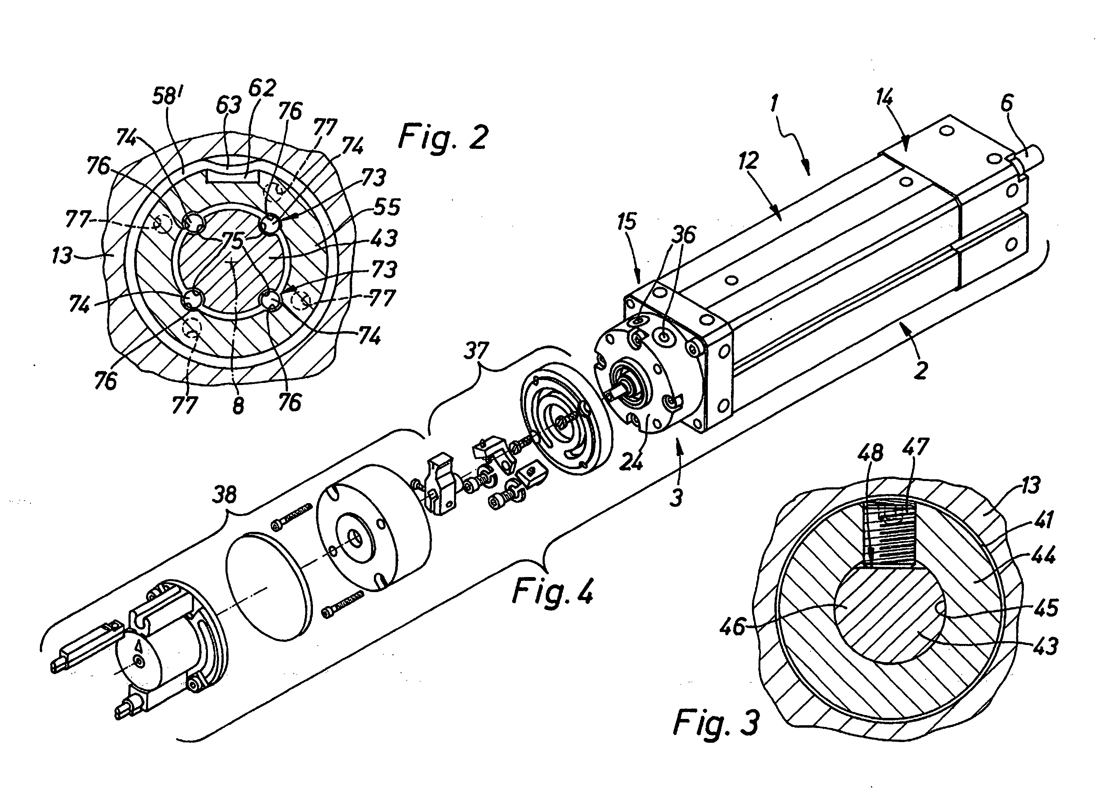

Die sowohl axial feste als auch drehfeste Verbindung zwischen der Lagerstange 43 und der Antriebswelle 26 erfolgt beim Ausführungsbeispiel unter Vermittlung einer Kupplungshülse 44, die im rückwärtigen Endbereich der Gehäuseausnehmung 16 unmittelbar im Anschluß an den Drehantrieb 3 einsitzt. Sie ist bezüglich der Gehäuseausnehmung 16 drehbar, zu welchem Zweck ein schmaler konzentrischer Ringspalt 41 zwischen der Kupplungshülse 44 und der Umfangsfläche der Gehäuseausnehmung 16 vorgesehen ist. Axial von beiden Stirnseiten her erstreckt sich in die Kupplungshülse 44 jeweils eine Sackbohrung 45, 45', in die die einander zugewandten Endabschnitte 46, 46' der Lagerstange 43 und der Antriebswelle 26 eingesteckt sind. Indem die Endabschnitte 46, 46' und die zugehörigen Sackbohrungen 45, 45' mit einem komplementären unkreisförmigen Querschnitt versehen sind - beim Ausführungsbeipiel liegt eine aus Fig. 3 ersichtliche, an wenigstens einer Stelle des Umfanges abgeflachte Kreisform vor -, ergibt sich insgesamt eine spielfreie Drehmitnahmeverbindung. Zur Realisierung der axial unbeweglichen Verbindung ist jeder Sackbohrung 45, 45' am Umfangsbereich eine Klemmschraube 47, 47' zugeordnet, die in die Kupplungshülse 44 eingeschraubt ist und sich gegen den Flachabschnitt 48 der Endabschnitte 46, 46' verspannen läßt.

Die Drehlagerung der Antriebswelle 26 erfolgt im Drehantriebs-Gehäuse 24 mittels axial beidseits der Kolbenkammer 25 installierter, insbesondere als Wälzlagereinrichtungen ausgeführter Lagereinrichtungen 52, 52'. Auf diese Weise erübrigt sich eine Querabstützung der Kupplungshülse 44. Diese kann jedoch wie abgebildet als rückseitiges Verschlußteil für den Aufnahmeraum 17 herangezogen werden, indem sie unter radialer Abdichtung in die Gehäuseausnehmung 16 eingesetzt ist. Sie kann hierzu am Außenumfang mit einer konzentrischen ringförmigen Dichtungseinrichtung 53 versehen sein, die mit der Umfangsfläche der Gehäuseausnehmung 16 in ständigem Dichtkontakt steht. Sie sitzt dabei zwischen dem rückwärtigen Ende des Gehäuserohres 13 und dem Einmündungsbereich des rückseitigen Anschlußkanals 21'. Die fluiddichte Abdichtung des Aufnahmeraums 17 im Bereich des vorderen Abschlußdeckels 14 übernimmt eine ringförmige Dichtungseinrichtung 54, die im vorderen Abschlußdeckel 14 festgelegt ist und die Abtriebsstange 6 dichtend konzentrisch umschließt.

Auf der Lagerstange 43 ist innerhalb des Aufnahmeraumes 17 eine fest mit dem Kolben 18 verbundene Lagerhülse 55 gelagert. Sie umschließt die Lagerstange 43 koaxial, wobei sie bezüglich der Lagerstange 43 axial verschiebbar und zugleich bezüglich der Längsachse 8 drehfest geführt ist.

Der Kolben 18 ist in zwei axial aufeinanderfolgende Kolbenteile 56, 56' unterteilt, die an ihren einander zugewandten Axialseiten jeweils über eine Aufnahmevertiefung 57, 57' verfügen. Die Querschnittsform der Aufnahmevertiefungen 57, 57' ist auf diejenige der Lagerhülse 55 abgestimmt, so daß letztere mit einander entgegengesetzten Längenabschnitten 59, 59' passend in die Aufnahmevertiefungen 57, 57' eintaucht. Die Lagerhülse 55 wird dabei von den die Aufnahmevertiefungen 57, 57' umfangsseitig begrenzenden hohlzylindrischen Wänden 58, 58' der Kolbenteile 56, 56' radial umfangsseitig umgriffen.

Die feste Verbindung zwischen der Lagerhülse 55 und dem Kolben 18 resultiert zweckmäßigerweise daraus, daß die beiden Kolbenteile 56, 56' von entgegengesetzten Axialseiten her fest auf die Lagerhülse 55 aufgepreßt sind. Auf diese Weise ergibt sich eine sowohl drehfeste als auch axial feste Verbindung zwischen der Lagerhülse 55 und jedem einzelnen der beiden Kolbenteile 56, 56'.

Als Sicherungsmaßnahme kann ergänzend vorgesehen sein, daß die Lagerhülse 55 an ihrer radial gerichteten Außenumfangsfläche über wenigstens eine Haltevertiefung 62 verfügt, in die die darüberlaufende Partie der Wände 58, 58' radial eingedrückt ist. Die eingedrückte Partie ist in Fig. 2 bei 63 ersichtlich. Auf diese Weise ergibt sich zusätzlich eine formschlüssige Fixierung.

Die eingedrückten Partien 63 befinden sich zweckmäßigerweise an den einander zugewandten stirnseitigen Bereichen der Wände 58, 58', wobei eine axial mittige Haltevertiefung 62 an der Kupplungshülse 44 vorgesehen sein kann, in die beide Wände 58, 58' gleichzeitig lokal eingedrückt sind.

Durch die sichere Preßverbindung zwischen den erwähnten Bestandteilen erübrigt sich eine zusätzliche direkte Verbindung zwischen den Kolbenteilen 56, 56'. Diese können sogar wie abgebildet mit axialem Abstand zueinander auf der Lagerhülse 55 sitzen. Sie sind jedoch zweckmäßigerweise so ausgebildet, daß die von ihnen übergriffenen Längenabschnitte 59, 59' der Lagerhülse 55 gleich lang sind.

Die beiden Kolbenteile 56, 56' tragen jeweils eine der beiden Dichtungseinrichtungen 22, 22'.

Um eine einfache und flexible Herstellung zu ermöglichen, ist die Abtriebsstange 6 als bezüglich des Kolbens 18 separates Bauteil ausgeführt. Es ist an dem der Vorderseite zugeordneten vorderen Kolbenteil 56 fest verankert, zu welchem Zweck beim Ausführungsbeispiel eine Bördelverbindung 64 vorgesehen ist. Die Abtriebsstange 6 taucht in eine in der vorderen Stirnseite des betreffenden Kolbenteils 56 ausgebildete axiale Vertiefung 65 ein und hat eine umlaufende Nut 66, in die der vordere Randbereich des Kolbenteils 56 unter Herstellung einer kraft- und formschlüssigen Verbindung eingedrückt ist.

Die Abtriebsstange 6 enthält eine zum benachbarten Kolbenteil 56 hin offene, an der entgegengesetzten Stirnseite jedoch geschlossene koaxiale Ausnehmung 67, die mit koaxialen Durchgangsöffnungen 68, 68' der beiden Kolbenteile 56, 56' fluchtet und gemeinsam mit diesen eine Aufnahme 72 bildet, in die die Lagerstange 43 ausgehend von der Kupplungshülse 44 je nach Axialposition der Abtriebseinheit 19 mehr oder weniger weit axial eintaucht.

Die Lagerhülse 55 könnte prinzipiell über eine Gleitlagereinrichtung an der Lagerstange 43 gelagert sein. Eine bessere und vor allem leichtgängigere Führung ergibt sich allerdings, wenn als Lagereinrichtung eine Wälzlagereinrichtung 73 vorgesehen ist, deren Lagerelemente von Wälzkörpern 74 gebildet sind, die sich beim axialen Verschieben der Lagerhülse 55 an der Lagerstange 43 abwälzen können. Die beim Ausführungsbeispiel vorgesehene Wälzlagereinrichtung 73 ist als Kugellagereinrichtung ausgeführt und enthält Kugeln als Wälzkörper 74.

Aus Fig. 2 ist ersichtlich, daß an der Lagerstange 43 mehrere über den Außenumfang verteilt angeordnete, längsverlaufende Führungsnuten 75 ausgebildet sind, mit denen die Wälzkörper 74 in Eingriff stehen. Radial gegenüberliegend jeder Führungsnut 75 befindet sich eine sich ebenfalls linear erstreckende Lagernut 76 am Innenumfang der Lagerhülse 55, so daß sich einzelne kanalartige Führungsabschnitte ergeben, in denen die Wälzkörper 74 gefangen sind. Auf diese Weise ist gewährleistet, daß eine relative Drehbewegung zwischen der Lagerstange 43 und der Lagerhülse 55 um die Längsachse 8 ausgeschlossen ist.

Jeder Lagernut 76 ist im Innern der Lagerhülse 55 ein kommunizierender Führungskanal 77 zugeordnet. Dieser bildet zusammen mit dem zugeordneten, von jeweils einer Führungsnut 75 und einer Lagernut 76 definierten Führungsabschnitt einen Umlaufkanal, in dem eine Vielzahl von Wälzkörpern 74 untergebracht ist. Wird die Lagerhülse 55 auf der Lagerstange 43 verschoben, können die Wälzkörper 74 in dem Umlaufkanal wandern und dadurch mit geringster Reibung in den Führungsnuten 75 abrollen.

Die Abtriebseinheit 19 ist rückseitig über den Kolben 18 radial bezüglich des Linearantriebs-Gehäuses 12 abgestützt. Im vorderen Bereich ist zur Abstützung beispielsgemäß eine Führungshülse 78 vorgesehen, die im vorderen Abschlußdeckel 14 gehalten ist und die außen zylindrisch konturierte Abtriebsstange 6 führend umschließt.

Am vorderen Endbereich des Aufnahmeraumes 17 ist noch ein Rotationslager 79 installiert, an dem der Kolben 18 bei maximal ausgefahrener Stellung der Abtriebseinheit 19 zur Anlage gelangen kann. Es reduziert Reibungskräfte, wenn die Abtriebseinheit 19 in dieser Position zu einer Drehbewegung angetrieben wird.

Die Übertragung des Drehmomentes von der Antriebswelle 26 zur Abtriebsstange 6 erfolgt über die Kupplungshülse 44, die Lagerstange 43, die Lagerhülse 55 und das vordere Kolbenteil 56. Bei einer Fluidbeaufschlagung des Kolbens 18 wird die Abtriebseinheit 19 axial verlagert, wobei die Lagerhülse 55 mit ihrer Wälzlagereinrichtung 73 auf der Lagerstange 43 entlangläuft.

## Patentansprüche

1. Dreh-Linear-Einheit, mit einem fluidbetätigten Drehantrieb (3), der eine zu einer Drehbewegung antreibbare Antriebswelle (26) aufweist und der an der Rückseite (4) eines fluidbetätigten Linearantriebes (2) angeordnet ist, der über eine axial beweglich und zugleich drehfest mit der Antriebswelle (26) des Drehantriebes (3) gekoppelte Abtriebseinheit (19) verfügt, die einen Kolben (18) und eine fest mit diesem verbundene, an der Vorderseite (5) des Linearantriebes (2) herausragende Abtriebsstange aufweist, **dadurch gekennzeichnet, daß** eine fest mit der Antriebswelle (26) des Drehantriebes (3) verbundene Lagerstange (43) vorhanden ist, die im Innern des Linearantriebes (2) koaxial in die Abtriebseinheit (19) hineinragt, daß auf der Lagerstange (43) eine fest mit dem Kolben (18) des Linearantriebes (2) verbundene Lagerhülse (55) drehfest und zugleich axial verschiebbar gelagert ist und daß der Kolben (18) in zwei axial aufeinanderfolgende Kolbenteile (56, 56') unterteilt ist, die an ihren einander zugewandten Axialseiten über jeweils eine Aufnahmevertiefung (57, 57') verfügen, wobei die Lagerhülse (55) zwischen den beiden Kolbenteilen (56, 56') angeordnet ist und mit jeweils einem Längenabschnitt (59, 59') in die Aufnahmevertiefungen (57, 57') eintaucht.

2. Dreh-Linear-Einheit nach Anspruch 1, **dadurch gekennzeichnet, daß** die Lagerhülse (55) über eine insbesondere als Kugellagereinrichtung ausgeführte Wälzlagereinrichtung (73) an der Lagerstange (43) axial verschiebbar und zugleich drehfest gelagert ist.

3. Dreh-Linear-Einheit nach Anspruch 2, **dadurch gekennzeichnet, daß** die Wälzlagereinrichtung (73) als Wälzkörper-Umlauf-Lagereinrichtung ausgeführt ist.

4. Dreh-Linear-Einheit nach Anspruch 2 oder 3, **dadurch gekennzeichnet, daß** die axial fest und zugleich mitdrehbar mit der Antriebswelle (26) verbundene Lagerstange (43) über eine oder mehrere längsverlaufende Führungsnuten (75) verfügt, mit denen die Wälzkörper (74) der Lagerhülse (55) derart in Eingriff stehen, daß sie zum einen eine Drehbewegung der Lagerhülse (55) bezüglich der Lagerstange (43) verhindern und sich zum andern beim axialen Verschieben der Lagerhülse (55) in den Führungsnuten (75) abwälzen.

5. Dreh-Linear-Einheit nach einem der Ansprüche 1 bis 4, **dadurch gekennzeichnet, daß** die beiden Kolbenteile (56, 56') mit ihren Aufnahmevertiefungen (57, 57') von entgegengesetzten Axialseiten her fest auf die Lagerhülse (55) aufgepreßt sind.

6. Dreh-Linear-Einheit nach einem der Ansprüche 1 bis 5, **dadurch gekennzeichnet, daß** die Lagerhülse (55) an ihrer radial gerichteten Außenumfangsfläche über wenigstens eine Haltevertiefung (62) verfügt, in die die die Aufnahmevertiefung (57, 57') umfangsseitig begrenzende hohlzylindrische Wand (58, 58') der Kolbenteile (56, 56') zum Herstellen einer formschlüssigen Verbindung lokal eingedrückt ist.

7. Dreh-Linear-Einheit nach einem der Ansprüche 1 bis 6, **dadurch gekennzeichnet, daß** die beiden Kolbenteile (56, 56') lediglich mittelbar über die Lagerhülse (55) axial zusammengehalten werden.

8. Dreh-Linear-Einheit nach einem der Ansprüche 1 bis 7, **dadurch gekennzeichnet, daß** die Abtriebsstange (6) ein bezüglich des Kolbens (18) separates Bauteil ist, das an dem ihm zugewandten Kolbenteil (56) durch eine Bördelverbindung (64) festgelegt ist.

9. Dreh-Linear-Einheit nach einem der Ansprüche 1 bis 8, **dadurch gekennzeichnet, daß** die Antriebswelle (26) und die Lagerstange (43) getrennte Bauteile sind, die durch eine zwischengeschaltete Kupplungshülse (44) drehfest miteinander verbunden sind.

10. Dreh-Linear-Einheit nach Anspruch 9, **dadurch gekennzeichnet, daß** die Kupplungshülse (54) ein rückseitiges Verschlußteil 1 für den den Kolben (18) aufnehmenden Aufnahmeraum (17) des Linearantriebes (2) bildet, indem sie unter Abdichtung drehbar in das Gehäuse des Linearantriebes (2) eingesetzt ist.

11. Dreh-Linear-Einheit nach einem der Ansprüche 1 bis 10, **dadurch gekennzeichnet, daß** der Drehantrieb (3) den rückseitigen Abschlußdeckel (15) des Linearantriebes (2) bildet.

## Claims

1. Combined rotary and linear unit with a rotary drive (3) operated by fluid power, which comprises a drive shaft (26) capable of being driven for rotary movement and is mounted on the rear (4) of a linear drive (2) operated by fluid power, which incorporates an axially movable output unit (19) which is non-rotatably coupled to the drive shaft (26) of the rotary drive (3), said output unit comprising a piston (18) and an output rod fixed thereto and projecting from the front (5) of the linear drive (2), **characterised in that** a bearing rod (43) fixed to the drive shaft (26) of the rotary drive (3) and coaxially projecting into the output unit (19) within the linear drive (2) is provided, **in that** a bearing sleeve (55) fixed to the piston (18) of the linear drive (2) is non-rotatably mounted on the bearing rod (43) for axial movement, and **in that** the piston (18) is divided into two axially consecutive piston parts (56, 56'), each having a locating recess (57, 57') at their adjacent axial ends, the bearing sleeve (55) being located between the two piston parts (56, 56') and entering into each of the locating recesses (57, 57') with a section (59, 59') of its length.

2. Combined rotary and linear unit according to claim 1, **characterised in that** the bearing sleeve (55) is non-rotatably mounted while being axially movable on the bearing rod (43) by means of a rolling bearing unit (73) designed in particular as a ball bearing unit.

3. Combined rotary and linear unit according to claim 2, **characterised in that** the rolling bearing unit (73) is designed as a recirculating rolling body bearing unit.

4. Combined rotary and linear unit according to claim 2 or 3, **characterised in that** the bearing rod (43), which is axially fixed to and at the same time rotating with the drive shaft (26), is provided with one or more longitudinal guide grooves (75) in such engagement with the rolling bodies (74) of the bearing sleeve (55) that the latter prevent a rotary movement of the bearing sleeve (55) in relation to the bearing rod (43) on the one hand and roll in the guide grooves (75) when the bearing sleeve (55) is axially displaced on the other hand.

5. Combined rotary and linear unit according to any of claims 1 to 4, **characterised in that** the two piston parts (56, 56') are securely pressed onto the bearing sleeve (55) with their locating recesses (57, 57') from opposite axial sides.

6. Combined rotary and linear unit according to any of claims 1 to 5, **characterised in that** the bearing sleeve (55) has at least one retaining recess (62) in the radial external circumferential surface, into which the hollow-cylindrical wall (58, 58') of the piston parts (56, 56'), which bounds the circumference of the locating recesses (57, 57'), is locally impressed to create a positive connection.

7. Combined rotary and linear unit according to any of claims 1 to 6, **characterised in that** the two piston parts (56, 56') are only indirectly held together by means of the bearing sleeve (55).

8. Combined rotary and linear unit according to any of claims 1 to 7, **characterised in that** the output rod (6) is a separate part from the piston (18) with an edged connection (64) to the adjacent piston part (56).

9. Combined rotary and linear unit according to any of claims 1 to 8, **characterised in that** the drive shaft (26) and the bearing rod (43) are separate parts non-rotatably connected to one another by a coupling sleeve (44) located in between.

10. Combined rotary and linear unit according to claim 9, **characterised in that** the coupling sleeve (54) forms a rear end part for the locating chamber (17) of the linear drive (2) housing the piston (18) by being rotatably installed in the housing of the linear drive (2) while forming a seal.

11. Combined rotary and linear unit according to any of claims 1 to 10, **characterised in that** the rotary drive (3) forms the rear end cover (15) of the linear drive (2).

## Revendications

1. Unité linéaire et tournante comportant un dispositif d'entraînement en rotation (3) actionné par un fluide, qui comporte un arbre d'entraînement (26) pouvant être entraîné en un mouvement de rotation et qui est disposé sur le côté arrière (4) d'un dispositif d'entraînement linéaire (2) actionné par un fluide, lequel possède une unité menée (19) déplaçable axialement et accouplée en même temps solidairement en rotation avec l'arbre d'entraînement (26) du dispositif d'entraînement en rotation (3), laquelle unité menée comporte un piston (18) et une tige menée reliée fixement à ce piston et dépassant du côté avant (5) du dispositif d'entraînement linéaire (2), **caractérisée en ce qu'**il est prévu une tige de palier (43) reliée fixement à l'arbre d'entraînement (26) du dispositif d'entraînement en rotation (3), laquelle, à l'intérieur du dispositif d'entraînement linéaire (2), s'engage coaxialement dans l'unité menée (19), **en ce que** sur la tige de palier (43) est montée solidairement en rotation et en même temps coulissante axialement une douille de palier (55) reliée fixement au piston (18) du dispositif d'entraînement linéaire (2), et **en ce que** le piston (18) est divisé en deux parties de piston (56, 56') se succédant axialement, qui disposent chacune, sur leurs côtés axiaux tournés l'un vers l'autre, d'un renfoncement récepteur (57, 57'), la douille de palier (55) étant disposée entre les deux parties (56, 56') du piston et pénétrant par un tronçon de sa longueur (59, 59') dans les renfoncements récepteurs (57, 57').

2. Unité linéaire et tournante selon la revendication 1, **caractérisée en ce que** la douille de palier (55) est montée, par l'intermédiaire d'un dispositif à palier de roulement (73), réalisé en particulier en tant que dispositif à roulements à billes, de manière à pouvoir coulisser axialement et en même temps solidairement en rotation sur la tige de palier (43).

3. Unité linéaire et tournante selon la revendication 2, **caractérisée en ce que** le dispositif à palier de roulement (73) est réalisé en tant que dispositif à palier à circulation de corps de roulement.

4. Unité linéaire et tournante selon la revendication 2 ou 3, **caractérisée en ce que** la tige de palier (43), liée fixement axialement et pouvant en même temps tourner avec l'arbre d'entraînement (26), présente une ou plusieurs rainures de guidage (75) s'étendant longitudinalement avec lesquelles les corps de roulement (74) de la douille de palier (55) sont en engagement de manière à empêcher d'une part un mouvement de rotation de la douille de palier (55) par rapport à la tige de palier (43) et à rouler, d'autre part, dans les rainures de guidage (75) pendant le coulissement axial de la douille de palier (55).

5. Unité linéaire et tournante selon l'une des revendications 1 à 4, **caractérisée en ce que** les deux parties (56, 56') du piston sont pressées fermement sur la douille de palier (55), par leurs renfoncements récepteurs (57, 57'), à partir de côtés axiaux opposés.

6. Unité linéaire et tournante selon l'une des revendications 1 à 5, **caractérisée en ce que** la douille de palier (55) présente, sur sa surface périphérique extérieure dirigée radialement, au moins un renfoncement de maintien (62) dans lequel est enfoncée localement la paroi (58, 58') cylindrique creuse, délimitant périphériquement le renfoncement récepteur (57, 57'), des parties (56, 56') du piston, afin de réaliser une liaison par complémentarité de formes.

7. Unité linéaire et tournante selon l'une des revendications 1 à 6, **caractérisée en ce que** les deux parties (56, 56') du piston sont maintenues ensemble axialement uniquement par l'intermédiaire de la douille de palier (55).

8. Unité linéaire et tournante selon l'une des revendications 1 à 7, **caractérisée en ce que** la tige menée (6) est un composant séparé du piston (18) qui est fixé, par une liaison sertie (64), sur la partie (56) du piston tournée vers celui-ci.

9. Unité linéaire et tournante selon l'une des revendications 1 à 8, **caractérisée en ce que** l'arbre d'entraînement (26) et la tige de palier (43) sont des composants séparés qui sont reliés entre eux solidairement en rotation par une douille d'accouplement (44) intercalée.

10. Unité linéaire et tournante selon la revendication 9, **caractérisée en ce que** la douille d'accouplement (54) forme une partie d'obturation arrière pour le logement (17) du dispositif d'entraînement linéaire (2) recevant le piston (18), par le fait qu'elle est insérée de manière étanche et tournante dans le boîtier du dispositif d'entraînement linéaire (2).

11. Unité linéaire et tournante selon l'une des revendications 1 à 10, **caractérisée en ce que** le dispositif d'entraînement en rotation (3) forme le couvercle terminal (15) arrière du dispositif d'entraînement linéaire (2).
